# EUROPÄISCHE PATENTSCHRIFT

(11) **EP 3 190 302 B1**
(45) Veröffentlichungstag und Bekanntmachung des Hinweises auf die Patenterteilung: **25.12.2019**
(21) Anmeldenummer: 16150692.8
(22) Anmeldetag: 08.01.2016
(51) Int. Cl.: F16D 3/84

(54) **ABDICHTANORDNUNG FÜR EINEN LÄNGENAUSGLEICH EINER GELENKWELLE UND GELENKWELLE**
SEAL ASSEMBLY FOR A LENGTH COMPENSATION OF A DRIVE SHAFT AND DRIVE SHAFT
AGENCEMENT D'ETANCHEITE POUR UN EQUILIBRAGE DES LONGUEURS D'UN ARBRE DE TRANSMISSION ET ARBRE DE TRANSMISSION

(43) Veröffentlichungstag der Anmeldung: 12.07.2017
(73) Patentinhaber: Spicer Gelenkwellenbau GmbH, 45143 Essen (DE)
(72) Erfinder: KRISCHAK, Mirana, 45149 Essen (DE)
(74) Vertreter: Neumann Müller Oberwalleney & Partner Patentanwälte

(56) Entgegenhaltungen:
- EP-A1- 1 500 835
- DE-C- 962 842
- US-A- 1 496 236

## Beschreibung

Die Erfindung betrifft eine Abdichtanordnung nach dem Oberbegriff des Anspruchs 1 sowie eine Gelenkwelle mit einer solchen Abdichtungsanordnung.

Eine solche Abdichtungsanordnung ist aus der DE 962 842 C bekannt.

Aus der EP 1 500 836 A1 ist eine weitere Abdichtungsanordnung bekannt. Die dort offenbarte Gelenkwelle umfasst ein erstes Wellenelement und ein zweites Wellenelement, die drehfest miteinander verbunden sind und entlang einer Längsachse verschiebbar zueinander geführt sind. Die Dichthülse ist als zylindrisches Rohr gestaltet und aus einem Kunststoff mit Formgedächtnis hergestellt. Die Dichthülse ist auf einer zylindrischen Sitzfläche des Sitzabschnitts aufgenommen. Die Sitzfläche ist mit zumindest einer Umfangsnut versehen oder weist radial vorstehende Elemente oder eine erhöhte Oberflächenrauheit auf. Nach dem Aufschieben der Dichthülse auf die Sitzfläche, wobei in diesem Zustand die Dichthülse ein Radialspiel mit der Sitzfläche aufweist, wird die Dichthülse im Bereich der Sitzfläche einer Wärmebehandlung unterzogen, so dass sich die Dichthülse zusammenzieht und auf der Sitzfläche verspannt wird und in die zumindest eine Umfangsnut eindringt. Somit ist ein sicherer axialer Halt und eine Sicherung gegen Verdrehen gegenüber dem ersten Wellenelement gegeben. Nachteil ist jedoch der zusätzliche aufwendige Verfahrensschritt des Erwärmens der Dichthülse.

In der DE 1 910 284 A1 ist eine Kreuzgelenkwelle beschrieben, welche ein erstes Wellenelement mit einer ersten Gelenkgabel und ein zweites Wellenelement mit einer zweiten Gelenkgabel umfasst. Das erste Wellenelement weist eine Außenverzahnung mit entlang einer Längsachse verlaufenden Außenzähnen auf. Das erste Wellenelement ist axial verstellbar in ein Anschlussrohr des zweiten Wellenelements aufgenommen, welches entsprechend der Außenverzahnung des ersten Wellenelements mit einer Innenverzahnung versehen ist. An einer zylindrischen Sitzfläche der Gelenkgabel des ersten Wellenelements ist eine Dichthülse mit einem ersten Ende befestigt. Die Dichthülse ist aus Metall gefertigt und mit dem ersten Wellenelement verschweißt. Die Dichthülse ist koaxial um das erste Wellenelement angeordnet und trägt an einem zweiten Ende einen Dichtungsträger, der mit einem Halteabschnitt in die Dichthülse von deren zweitem Ende her eingesteckt und mit dieser kontinuierlich verschweißt ist. Von Nachteil ist hierbei, dass die Dichthülse in einem separaten Verfahrensschritt mit dem ersten Wellenelement verschweißt werden muss.

Eine ähnliche Abdichtungsanordnung für eine Kreuzgelenkwelle zeigt EP 1 460 296 B1. Die Dichthülse ist ebenfalls aus Metall gefertigt und mit dem ersten Wellenelement verbunden.

Die US 1 496 236 A beschreibt einen Längenausgleich im Allgemeinen und insbesondere einen Längenausgleich einer Kreuzgelenkwelle mit einem rohrförmigen ersten Wellenelement und einem zweiten Wellenelement, das im ersten Element aufgenommen ist. Das zweite Wellenelement ist am ersten Wellenelement über eine Verzahnung drehfest aufgenommen und kann entlang einer Längsachse relativ zum ersten Wellenelement eine Axialverstellung ausführen. Das zweite Wellenelement bildet eine kreiszylindrische Sitzfläche für das Befestigungsende einer Dichthülse aus Metall. Das zweite Wellenelement weist im Anschluss an die Sitzfläche eine Umfangsnut auf, in die ein Befestigungsabschnitt der Dichthülse durch ein Rollumformen radial eingedrückt ist. Die Dichthülse ist somit axial am zweiten Wellenelement festgelegt. An ihrem freien Ende weist die Dichthülse einen nach innen gerichteten Kragen auf. Ferner weist sie ein Gewinde auf, auf welches eine weitere Hülse aufgeschraubt ist, die eine Dichtung aufnimmt. Diese Dichtung dient zur Abdichtung gegenüber der Außenfläche des rohrförmigen ersten Wellenelements. Auch hier ist zum Befestigen der Dichthülse an dem Wellenelement ein weiterer Verfahrensschritt, nämlich das Rollumformen, erforderlich.

Die DE 962 842 C1 beschreibt einen Längenausgleich einer Gelenkwelle bei der die Dichthülse an einem Ende eine Dichtung aufweist und am anderen Ende die Dichthülse die mit Hilfe eines Gummirings sowohl einrastet also auch abdichtet.

Der Erfindung liegt die Aufgabe zugrunde, eine Abdichtanordnung für einen Längenausgleich einer Gelenkwelle bereitzustellen, bei der die Dichthülse einfach am entsprechenden Wellenelement befestigt werden kann.

Die Aufgabe wird durch eine Abdichtanordnung gemäß Anspruch 1 gelöst. Ferner wird die Aufgabe durch eine Gelenkwelle nach Anspruch 15 gelöst.

Die Dichthülse wird demnach zum Befestigen auf dem Befestigungsabschnitt auf diesen axial aufgeschoben, wobei der Befestigungsabschnitt im vollständig aufgeschobenen Zustand dafür sorgt, dass der mindestens eine Rastvorsprung rastend in die Umfangsnut des Sitzabschnitts eingreift. Somit kann die Dichthülse durch einfaches Aufschieben auf den Sitzabschnitt mit dem ersten Wellenelement verbunden werden.

Darüber hinaus ist an dem Sitzabschnitt eine Dichtfläche vorgesehen, gegen welche die Dichthülse dichtend in Anlage gehalten ist. Da die Dichthülse nicht umlaufend in Umfangsrichtung verschweißt, verklebt oder auf eine andere stoffschlüssige Art mit dem ersten Wellenelement verbunden ist, ist über die Verbindungsmittel an sich keine Dichtwirkung gegeben. Die Dichtung wird daher durch die Dichtfläche am Sitzabschnitt gewährleistet.

Der Befestigungsabschnitt ist durch Aufschieben auf den Sitzabschnitt in radialer Richtung elastisch verformbar, insbesondere aufweitbar. Somit wird beim Befestigen der Dichthülse auf dem Sitzabschnitt, d.h. beim Aufschieben desselben auf den Sitzabschnitt, zunächst der Befestigungsabschnitt derart verformt, dass die Dichthülse bzw. der Befestigungsabschnitt auf den Sitzabschnitt aufgeschoben werden kann. Bei Erreichen der vollständig aufgeschobenen Position der Dichthülse rastet der zumindest eine Rastvorsprung in die Umfangsnut ein, wobei der Befestigungsabschnitt sich wieder elastisch in Richtung seiner ursprünglichen Form zurückverformt. Somit ist kein weiterer Verfahrensschritt erforderlich, um die Dichthülse auf dem Sitzabschnitt zu befestigen.

Wenn ein einzelner umlaufender Rastvorsprung in Form eines umlaufenden Kragens vorgesehen ist, ist der Befestigungsabschnitt im Wesentlichen zylindrisch aufweitbar. Wenn mehrere über den Umfang verteilte einzelne Rastvorsprünge vorgesehen sind, die in Umfangsrichtung voneinander beabstandet sind, kann sich der Befestigungsabschnitt von einer ursprünglich im Wesentlichen zylindrischen Form in eine von einer zylindrischen Form abweichende Form verformt, wobei die Umfangsabschnitte des Befestigungsabschnitts mit Rastvorsprüngen weiter radial nach außen verformt werden als die Bereiche des Befestigungsabschnitts zwischen zwei Rastvorsprüngen, so dass sich im Querschnitt eine unrunde Form ergibt.

Um möglichst gute elastische Verformungseigenschaften zu gewährleisten, kann zumindest der Befestigungsabschnitt, gegebenenfalls aber auch die gesamte Dichthülse, bzw. ein größter Teil der Dichthülse aus Kunststoff gefertigt sein. Selbstverständlich können an dieser Dichthülse weitere Elemente angeformt oder stoffschlüssig mit dieser verbunden sein, die gegebenenfalls aus einem anderen Material hergestellt sind.

Die Dichtfläche ist vorzugsweise konisch gestaltet und läuft in Richtung zur Dichthülse zu. Somit kann beim axialen Aufschieben die Dichthülse axial gegen die Dichtfläche angeschoben werden. Beim Aufschieben der Dichthülse bzw. des Befestigungsabschnitts der Dichthülse auf die Dichtfläche ist somit gewährleistet, dass der Befestigungsabschnitt in diesem Bereich geringfügig radial aufgeweitet wird, um einen vorgespannten Sitz des Befestigungsabschnitts auf der Dichtfläche zu gewährleisten.

Vorzugsweise ist der zumindest eine Rastvorsprung axial gegen eine Stützfläche der Umfangsnut abgestützt, und zwar in einer Richtung entgegen der Richtung, in die man die Dichthülse von dem Sitzabschnitt abziehen würde; also von der Dichtfläche weg.

Um eine ausreichende Vorspannung des Befestigungsabschnitts gegenüber der Dichthülse zu gewährleisten, kann der Befestigungsabschnitt axial zwischen der Stützfläche der Umfangsnut und der Dichtfläche des Sitzabschnitts elastisch verspannt sein.

Vorzugsweise weist die Dichthülse mehrere über den Umfang verteilt angeordnete voneinander beabstandete Rastvorsprünge auf.

Um ein einfaches Aufschieben des Befestigungsabschnitts der Dichthülse auf den Sitzabschnitt zu gewährleisten, kann vorgesehen sein, dass zwischen dem Sitzabschnitt und einer Innenumfangsfläche des Befestigungsabschnitts ein Radialspiel vorgesehen ist. Alternativ kann vorgesehen sein, dass im vollständig aufgeschobenen Zustand der Befestigungsabschnitt in Anlage zu einer Sitzfläche des Sitzabschnitts gelangt, um eine weitere Abdichtung zusätzlich zur Abdichtung gegenüber der Dichtfläche zu gewährleisten.

Der Befestigungsabschnitt ist an einem ersten axialen Ende der Dichthülse angeordnet. An einem zweiten axialen Ende der Dichthülse kann ein Dichtabschnitt vorgesehen sein, der eine Dichtung aufweist, wobei die Dichtung dazu dient, die Dichthülse gegenüber einem zweiten Wellenelement der Gelenkwelle abzudichten.

In einer Ausgestaltung ist die Dichthülse mehrteilig aufgebaut und weist ein erstes Rohrendelement, an dem der Befestigungsabschnitt ausgebildet ist, und ein zweites Rohrendelement, an dem der Dichtabschnitt ausgebildet ist, auf. Das zweite Rohrendelement kann mit dem ersten Rohrendelement, vorzugsweise stoffschlüssig, unmittelbar oder über zumindest ein Rohrzwischenelement verbunden sein.

Die Rohrendelemente und das ggf. zumindest eine Rohrzwischenelement können aus Kunststoff hergestellt sein.

Bevorzugte Ausführungsbeispiele sind anhand der Figuren im Folgenden näher dargestellt und erläutert. Hierin zeigt
- Figur 1: eine schematische Seitenansicht einer Gelenkwelle mit einem Längenausgleich mit einer ersten Ausführungsform einer erfindungsgemäßen Abdichtanordnung;
- Figur 2: ein erstes Wellenelement mit Gelenkwelle und Dichthülse in vergrößerter Darstellung einer zweiten Ausführungsform einer Abdichtanordnung, und
- Figur 3: die Befestigung der Dichthülse an dem ersten Wellenelement in vergrößerter Darstellung gemäß Ausschnitt X in Figur 2.

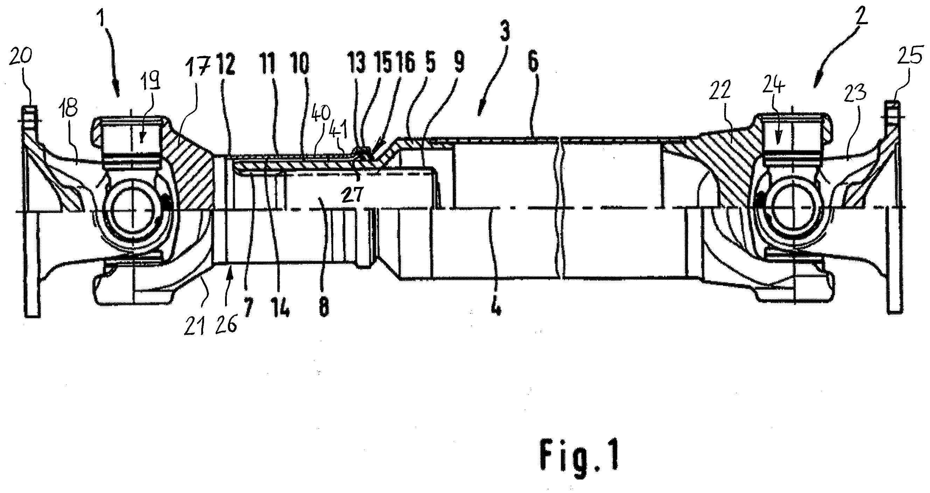

Figur 1 zeigt eine Gelenkwelle in Form einer Kreuzgelenkwelle mit einem ersten Kreuzgelenk 1 und einem zweiten Kreuzgelenk 2, die über eine Welle mit Längenausgleich 3 miteinander drehfest verbunden sind. Das erste Kreuzgelenk 1 weist eine erste Innengabel 17 und eine erste Außengabel 18 auf, die über eine erste Zapfenkreuzgarnitur 19 gelenkig miteinander verbunden sind. Die erste Außengabel 18 weist einen ersten Flansch 20 zum Anschluss an ein treibendes oder angetriebenes Bauteil auf. Die erste Innengabel 17 geht in einen Wellenzapfen 8 über, wobei die erste Innengabel 17 und der Wellenzapfen 8 ein erstes Wellenelement 21 darstellen.

Das zweite Kreuzgelenk 2 umfasst eine zweite Innengabel 22 und eine zweite Außengabel 23, die über eine zweite Zapfenkreuzgarnitur 24 gelenkig miteinander verbunden sind.

Die zweite Außengabel 23 weist einen zweiten Flansch 25 zum Verbinden mit einem treibenden oder angetriebenen Bauteil auf. Die zweite Innengabel 22 ist mit einem Anschlussrohr 6 fest verbunden, welches wiederum mit einem zweiten Wellenelement 5 in Form einer Hülse drehfest verbunden ist.

Das zweite Wellenelement 5 hat eine Längsbohrung, in der eine Innenverzahnung 7 angeordnet ist, deren Zähne sich parallel zu einer Längsachse 4 erstrecken und umfangsverteilt angeordnet sind.

Der Wellenzapfen 8 weist eine komplementäre Außenverzahnung 9 auf, deren Zähne in die Zähne der Innenverzahnung 7 eingreifen und längsverschieblich zu diesen gehalten sind, so dass zwischen dem Wellenzapfen 8 und dem zweiten Wellenelement 5 Drehmoment um die Längsachse 4 übertragen werden kann.

Das zweite Wellenelement 5 weist eine äußere kreiszylindrische Anlagefläche 10 auf. Koaxial um den Wellenzapfen 8 und um das zweite Wellenelement 5 ist eine Dichthülse 11 angeordnet, die mit einem ersten axialen Ende 12 auf einem Sitzabschnitt 26 des ersten Wellenelements 21 aufgenommen ist. An einem dem ersten axialen Ende 12 gegenüberliegenden zweiten axialen Ende 13 der Dichthülse 11 ist ein Dichtungsträger 15 mit einem Dichtabschnitt 16 angeschlossen. Hierbei ist die Dichthülse 11 zweigeteilt, wobei ein erstes Rohrendelement 40 das erste axiale Ende 12 der Dichthülse 11 aufweist und ein zweites Rohrendelement 41 den Dichtungsträger 15 mit dem zweiten Ende 13 der Dichthülse 11 aufweist. Die beiden Rohrendelemente 40, 41 sind unmittelbar miteinander verbunden. Die beiden Rohrendelemente 40, 41 sind aus Kunststoff gefertigt und miteinander verschweißt.

Die Dichthülse 11 weist eine Innenumfangsfläche 14 auf, die zu der Anlagefläche 10 mit radialem Abstand angeordnet ist. Im Bereich des Dichtabschnitts 16 sitzt in dem Radialspalt zwischen der Innenumfangsfläche 14 der Dichthülse 11 und der Anlagefläche 10 des zweiten Wellenelements 5 eine Dichtung 27, welche am Dichtungsabschnitt 16 befestigt ist und in dichtender Anlage zur Anlagefläche 10 gehalten ist. Diese Abdichtungsanordnung dient dazu, den Eintritt von Schmutz oder Feuchtigkeit in den Längenausgleich 3 und den Austritt von Schmierfett aus demselben zu verhindern. Solche Kreuzgelenkwellen werden zur Weiterleitung von Drehmomenten, beispielsweise zwischen einem Motor und einem Getriebe, allgemein im Maschinenbau oder aber in Fahrzeugen, eingesetzt.

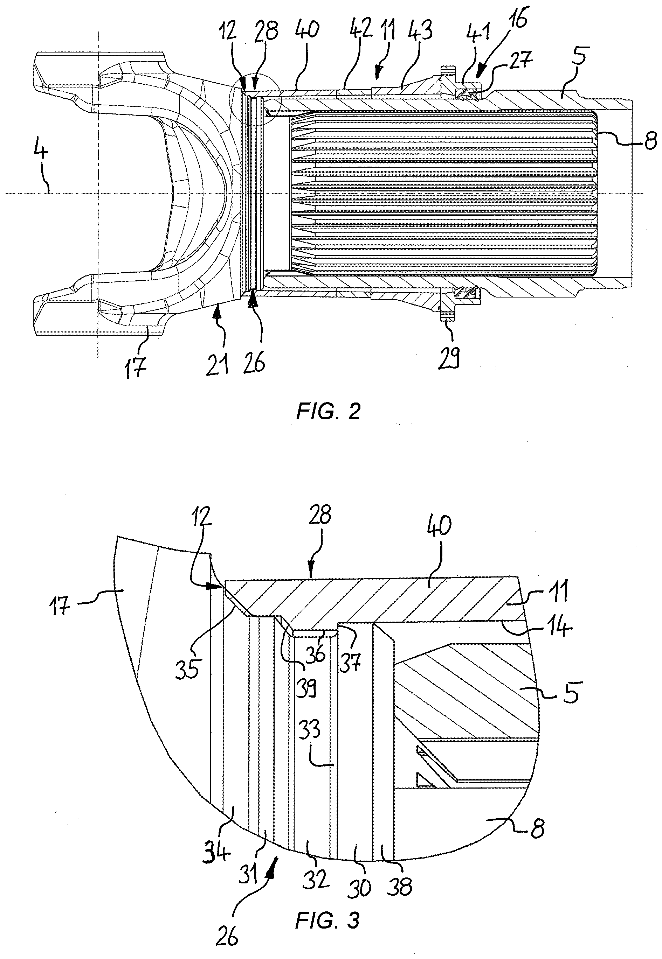

Figur 1 dient lediglich der schematischen Übersicht der einzelnen Bauteile der Gelenkwelle. Figur 2 zeigt den Aufbau einer alternativen Ausführungsform einer Abdichtanordnung im Detail. Figur 3 zeigt den Ausschnitt X gemäß Figur 2 in einer vergrößerten Darstellung. Die Figuren 2 und 3 werden im Folgenden zusammen beschrieben.

Die Abdichtanordnung gemäß der Figuren 2 und 3 ist vierteilig aufgebaut. Die Dichthülse 11 weist wie bei der ersten Ausführungsform gemäß Figur 1 ein erstes Rohrendelement 40 auf, welches das erste axiale Ende 12 der Dichthülse 11 bildet, und ein zweites Rohrendelement 41 auf, welches das zweite axiale Ende 13 der Dichthülse 11 bildet. Zwischen den beiden Rohrendelementen 40, 41 sind zwei Rohrzwischenelemente 42, 43 angeordnet, die miteinander und jeweils mit einem der Rohrendelemente 40, 41 verbunden sind und gemeinsam die rohrförmige Dichthülse 11 bilden. Die Längen der einzelnen Rohrzwischenelemente 42, 43 und ggf. auch der Rohrendelemente 40, 41 können je nach erforderlicher Gesamtlänge der Dichthülse 11 angepasst werden.

An einem dem ersten axialen Ende 12 zugewandten Ende des zweiten Rohrendelements 41 weist dieses einen Schweißflansch 29 auf, mit dem das zweite Rohrendelement 40 mit einem der beiden Rohrzwischenelementen 43 verschweißt ist.

Am ersten axialen Ende 12 weist die Dichthülse 11 den Befestigungsabschnitt 28 auf, mit dem die Dichthülse 11 auf dem Sitzabschnitt 26 des ersten Wellenelements 21 aufsitzt.

Der Sitzabschnitt 26 weist eine Sitzfläche mit einem ersten Sitzflächenabschnitt 30 und einem zweiten Sitzflächenabschnitt 31 auf, die als Außenumfangsflächen gebildet sind und die durch eine Umfangsnut 32 voneinander getrennt sind. Der erste Sitzflächenabschnitt 30 ist dem Wellenzapfen 8 näher angeordnet und der zweite Sitzflächenabschnitt 31 der ersten Innengabel 17.

Die Umfangsnut 32 bildet eine dem Wellenzapfen 8 näher angeordnete Stützfläche 33, welche der ersten Innengabel 17 zugewandt ist.

An der Innenumfangsfläche 14 der Dichthülse 11 ist ein Rastvorsprung 36 als umlaufenden Kragen angeformt, wobei der Rastvorsprung 36 nach innen in radialer Richtung zur Längsachse 4 von der Innenumfangsfläche 14 vorsteht. Der Rastvorsprung 36 greift in die Umfangsnut 32 ein, wobei eine Kreisringfläche 37, die auf einer Ebene angeordnet ist, welche senkrecht zur Längsachse 4 steht, gegen die Stützfläche 33 der Umfangsnut 32 axial von der ersten Innengabel 17 weggerichtet abgestützt ist. Die Stützfläche 33 ist ebenfalls auf einer Ebene angeordnet, welche senkrecht zur Längsachse 4 steht. Somit ist im montierten Zustand der Dichthülse 17 diese axial auf dem Befestigungsabschnitt 28 gesichert.

Der Befestigungsabschnitt 28 weist ferner zwischen dem zweiten Sitzflächenabschnitt 31 und der ersten Innengabel 17 eine konusförmige Dichtfläche 34 auf, wobei sich die Dichtfläche 34 in Richtung zum Wellenzapfen 8 hin verjüngt. Der Befestigungsabschnitt 28 der Dichthülse 11 ist axial in Anlage zur Dichtfläche 34 gehalten. Hierzu weist der Befestigungsabschnitt 28 am ersten Ende 12 eine Innenfläche 35 auf, die ebenfalls konusförmig gestaltet ist und sich in Richtung zur Dichtfläche 34 hin öffnet. Die Öffnungswinkel der Dichtfläche 34 und der Innenfläche 35 sind zumindest annähernd identisch, so dass diese beiden Flächen flächig in Anlage gehalten sind. In Figur 3 ist anzumerken, dass der Befestigungsabschnitt 28 unverformt dargestellt ist. Es ist daher zu erkennen, dass ein gewisses Übermaß vorhanden ist, so dass der Befestigungsabschnitt 28 tatsächlich (abweichend von der vereinfachten Darstellung in Fig. 3) etwas gestaucht und/oder radial nach außen aufgeweitet ist. Hierzu ist der Befestigungsabschnitt 28 zwischen der Stützfläche 33 und der Dichtfläche 34 verspannt.

Damit der Befestigungsabschnitt 28 gute elastische Verformungseigenschaften aufweist, kann die Wanddicke der Dichthülse 11 im Bereich des Befestigungsabschnitts 28 gegenüber dem übrigen Bereich der Dichthülse 11 reduziert sein (nicht dargestellt).

Zur Montage wird die Dichthülse 11 mit dem Befestigungsabschnitt 28 auf den Sitzabschnitt 26 aufgeschoben, bis der Rastvorsprung 36 in die Umfangsnut 32 eingreift. Zum einfachen Aufschieben ist im Übergangsbereich von dem ersten Sitzflächenabschnitt 30 und dem Wellenzapfen 8 eine konusförmige Anlauffläche 38 gebildet, die als Außenumfangsfläche dargestellt ist und sich zum Wellenzapfen 8 hin verjüngt. Der Rastvorsprung 36 weist eine entsprechende konusförmige Gegenfläche 39 auf, welche als Innenumfangsfläche gestaltet ist und in Richtung zum ersten Ende 12 hin erweitert ist. Beim Aufschieben der Dichthülse 11 auf den Sitzabschnitt 26 läuft somit die Gegenfläche 39 zunächst gegen die Anlauffläche 38 an. Durch die konusförmige Ausgestaltung der Anlauffläche 38 wird der Befestigungsabschnitt 28 radial nach außen aufgeweitet, so dass der Rastvorsprung 36 auf den ersten Sitzflächenabschnitt 30 aufläuft und axial weitergeschoben werden kann, bis der Rastvorsprung 36 in die Umfangsnut 32 eintaucht.

Um ein einfaches Aufschieben zu gewährleisten und auch um ein möglichst problemloses Auffädeln der Dichthülse 11 auf den Sitzabschnitt 26 zu ermöglichen, weist die Innenumfangsfläche 14 im Bereich zwischen dem ersten Ende 12 und dem Rastvorsprung 36 einen größeren Innendurchmesser auf als im Bereich, der sich betrachtet vom ersten Ende 12 an den Rastvorsprung 36 in Richtung zum zweiten Ende 13 anschließt. Ebenso ist der Außendurchmesser des ersten Sitzflächenabschnitts 30 kleiner als der Außendurchmesser des zweiten Sitzflächenabschnitts 31.

Um eine möglichst gute elastische Verformbarkeit zu gewährleisten, ist die Dichthülse 11 aus Kunststoff gefertigt.

### Bezugszeichenliste

- 1: erstes Kreuzgelenk
- 2: zweites Kreuzgelenk
- 3: Längenausgleich
- 4: Längsachse
- 5: zweites Wellenelement
- 6: Anschlussrohr
- 7: Innenverzahnung
- 8: Wellenzapfen
- 9: Außenverzahnung
- 10: Anlagefläche
- 11: Dichthülse
- 12: erstes axiales Ende
- 13: zweites axiales Ende
- 14: Innenumfangsfläche
- 15: Dichtungsträger
- 16: Dichtabschnitt
- 17: erste Innengabel
- 18: erste Außengabel
- 19: erste Zapfenkreuzgarnitur
- 20: erster Flansch
- 21: erstes Wellenelement
- 22: zweite Innengabel
- 23: zweite Außengabel
- 24: zweite Zapfenkreuzgarnitur
- 25: zweiter Flansch
- 26: Sitzabschnitt
- 27: Dichtung
- 28: Befestigungsabschnitt
- 29: Schweißflansch
- 30: erster Sitzflächenabschnitt
- 31: zweiter Sitzflächenabschnitt
- 32: Umfangsnut
- 33: Stützfläche
- 34: Dichtfläche
- 35: Innenfläche
- 36: Rastvorsprung
- 37: Kreisringfläche
- 38: Anlauffläche
- 39: Gegenfläche
- 40: erstes Rohrendelement
- 41: zweites Rohrendelement
- 42: Rohrzwischenelement
- 43: Rohrzwischenelement

## Patentansprüche

1. Abdichtanordnung für einen Längenausgleich einer Gelenkwelle (3), wobei die Abdichtanordnung Folgendes aufweist:
ein erstes Wellenelement (21), das einen Sitzabschnitt (26) aufweist,
eine Dichthülse (11) mit einem Befestigungsabschnitt (28), wobei zur Fixierung der Dichthülse (11) auf dem ersten Wellenelement (21) eine Umfangsnut (32) am Sitzabschnitt (26) angeordnet ist, in die die Dichthülse (11) eingreift, und wobei die Dichthülse (11) mit dem Befestigungsabschnitt (28) auf dem Sitzabschnitt (26) in Richtung einer Längsachse (4) axial aufgeschoben ist, und
zumindest einen Rastvorsprung (36), der radial nach innen vorstehend am Befestigungsabschnitt (28) angeordnet ist und der im vollständig aufgeschobenen Zustand der Dichthülse (11) rastend in die Umfangsnut (32) eingreift,
**dadurch gekennzeichnet,**
**dass** der Sitzabschnitt (26) eine umlaufende Dichtfläche (34) aufweist, gegen die der Befestigungsabschnitt (28) der Dichthülse (11) im vollständig aufgeschobenen Zustand elastisch verspannt in Anlage ist.

2. Abdichtanordnung nach Anspruch 1,
**dadurch gekennzeichnet,**
**dass** der Befestigungsabschnitt (28) durch Aufschieben auf den Sitzabschnitt (26) in radialer Richtung elastisch verformbar, insbesondere aufweitbar, ist und im vollständig aufgeschobenen Zustand der Dichthülse (11) den zumindest einen Rastvorsprung (36) in der Umfangsnut (32) hält.

3. Abdichtanordnung nach einem der vorangehenden Ansprüche,
**dadurch gekennzeichnet,**
**dass** zumindest der Befestigungsabschnitt (28) der Dichthülse (11) aus Kunststoff hergestellt ist.

4. Abdichtanordnung nach einem der vorangehenden Ansprüche,
**dadurch gekennzeichnet,**
**dass** der Befestigungsabschnitt (28) der Dichthülse (11) mit einer umlaufenden Innenfläche (35) oder Innenkante gegen die Dichtfläche (34) in Anlage ist.

5. Abdichtanordnung nach einem der vorangehenden Ansprüche,
**dadurch gekennzeichnet,**
**dass** die Dichtfläche (34) konisch, in Richtung zur Dichthülse (11) zulaufend gestaltet ist.

6. Abdichtanordnung nach einem der vorangehenden Ansprüche,
**dadurch gekennzeichnet,**
**dass** der zumindest eine Rastvorsprung (36) axial gegen eine Stützfläche (33) der Umfangsnut (32) abgestützt ist.

7. Abdichtanordnung nach Anspruch 6,
**dadurch gekennzeichnet,**
**dass** der Befestigungsabschnitt (28) der Dichthülse (11) axial zwischen der Stützfläche (33) der Umfangsnut (32) und der Dichtfläche (34) des Sitzabschnitts (26) elastisch verspannt ist.

8. Abdichtanordnung nach einem der vorangehenden Ansprüche,
**dadurch gekennzeichnet,**
**dass** die Dichthülse (11) mehrere über den Umfang verteilt angeordnete Rastvorsprünge (36) aufweist.

9. Abdichtanordnung nach einem der vorangehenden Ansprüche,
**dadurch gekennzeichnet,**
**dass** zwischen dem Sitzabschnitt (26) und einer Innenumfangsfläche (14) des Befestigungsabschnitts (28) der Dichthülse (11) ein Radialspiel vorgesehen ist.

10. Abdichtanordnung nach einem der vorangehenden Ansprüche,
**dadurch gekennzeichnet,**
**dass** der Befestigungsabschnitt (28) an einem ersten axialen Ende (12) der Dichthülse (11) angeordnet ist.

11. Abdichtanordnung nach Anspruch 10,
**dadurch gekennzeichnet,**
**dass** an einem zweiten axialen Ende (13) der Dichthülse (11) ein Dichtabschnitt (16) mit einer Dichtung (27) angeordnet ist, der dazu dient, die Dichthülse (11) gegenüber einem zweiten Wellenelement (5) abzudichten.

12. Abdichtanordnung nach Anspruch 11,
**dadurch gekennzeichnet,**
**dass** die Dichthülse (11) ein erstes Rohrendelement (40), an dem der Befestigungsabschnitt (28) ausgebildet ist, und ein zweites Rohrendelement (41), an dem der Dichtabschnitt (16) ausgebildet ist, aufweist, wobei die beiden Rohrendelemente (40, 41) zumindest mittelbar miteinander verbunden, insbesondere verschweißt sind.

13. Abdichtanordnung nach Anspruch 12,
**dadurch gekennzeichnet,**
**dass** zwischen den beiden Rohrendelementen (40, 41) zumindest ein Rohrzwischenelement (42, 43) angeordnet ist.

14. Abdichtanordnung nach einem der Ansprüche 12 oder 13,
**dadurch gekennzeichnet,**
**dass** die Rohrendelemente (40, 41) und das ggf. zumindest ein Rohrzwischenelement (42, 43) aus Kunststoff hergestellt sind.

15. Gelenkwelle mit einer Abdichtanordnung nach einem der vorangehenden Ansprüche, wobei die Gelenkwelle ferner Folgendes aufweist:
ein zweites Wellenelement (5), das drehfest und entlang einer Längsachse (4) verstellbar mit dem ersten Wellenelement (21) verbunden ist und das eine umlaufende Anlagefläche (10) aufweist, wobei die Dichthülse (11) eine Dichtung (27) aufweist, die in dichtender Anlage zur Anlagefläche (10) angeordnet ist.

## Claims

1. Sealing arrangement for a length compensation of an articulated shaft (3), wherein the sealing arrangement has the following:
a first shaft element (21), having a seat portion (26),
a sealing sleeve (11) with a fastening portion (28), wherein for fixing the sealing sleeve (11) on the first shaft element (21) a circumferential groove (32) is arranged on the seat portion (26), in which the sealing sleeve (11) engages, and wherein the sealing sleeve (11) is axially pushed with the fastening element (28) onto the seat portion (26) in direction of a longitudinal axis (4), and
at least one locking projection (36), which is arranged on the fastening portion (28) projecting radially inwards and which in the completely pushed-on condition of the sealing sleeve (11) engages in a locking manner in the circumferential groove (32),
**characterised in**
**that** the seat portion (26) has a circumferentially extending sealing face (34), against which the fastening portion (28) of the sealing sleeve (11) abuts in an elastically biased manner in the completely pushed-on condition.

2. Sealing arrangement according to claim 1,
**characterised in**
**that** the fastening portion (28) is elastically deformable in radial direction, especially expandable, by means of pushing onto the seat portion (26) and holds, in the completely pushed-on condition of the sealing sleeve (11), the at least one locking projection (36) in the circumferential groove (32).

3. Sealing arrangement according to anyone of the preceding claims,
**characterised in**
**that** at least the fastening portion (28) of the sealing sleeve (11) is made from plastics.

4. Sealing arrangement according to anyone of the preceding claims,
**characterised in**
**that** the fastening portion (28) of the sealing sleeve (11) abuts the sealing face (34) with a circumferentially extending inner face (35) or an inner edge.

5. Sealing arrangement according to anyone of the preceding claims,
**characterised in**
**that** the sealing face (34) is formed conically tapering in direction to the sealing sleeve (11).

6. Sealing arrangement according to anyone of the preceding claims,
**characterised in**
**that** the at least one locking projection (36) is axially supported on a support face (33) of the circumferential groove (32).

7. Sealing arrangement according to claim 6,
**characterised in**
**that** the fastening portion (28) of the sealing sleeve (11) is elastically clamped axially between the support face (33) of the circumferential groove (32) and the sealing face (34) of the seat portion (26).

8. Sealing arrangement according to anyone of the preceding claims,
**characterised in**
**that** the sealing sleeve (11) has several locking projections (36) arranged distributedly across the circumference.

9. Sealing arrangement according to anyone of the preceding claims,
**characterised in**
**that** between the seat portion (26) and an inner circumferential face (14) of the fastening portion (28) of the sealing sleeve (11) a radial play is provided.

10. Sealing arrangement according to anyone of the preceding claims,
**characterised in**
**that** the fastening portion (28) is arranged on a first axial end (12) of the sealing sleeve (11).

11. Sealing arrangement according to claim 10,
**characterised in**
**that** on a second axial end (13) of the sealing sleeve (11) a sealing portion (16) with a sealing (27) is arranged, which serves to seal the sealing sleeve (11) relative to a second shaft element (5).

12. Sealing arrangement according to claim 11,
**characterised in**
**that** the sealing sleeve (11) has a first tube end element (40), on which the fastening portion (28) is formed, and a second tube end element (41), on which the sealing portion (16) is formed, wherein the two tube end elements (40, 41) are at least indirectly connected, especially welded to each other.

13. Sealing arrangement according to claim 12,
**characterised in**
**that** between the two tube end elements (40, 41) at least one tube intermediate element (42, 43) is arranged.

14. Sealing arrangement according to anyone of claims 12 or 13,
**characterised in**
**that** the tube end elements (40, 41) and the optional at least one tube intermediate element (42, 43) are made from plastics.

15. Articulated shaft with a sealing arrangement according to anyone of the preceding claims, wherein the articulated shaft has the following:
a second shaft element (5), which is connected non-rotationally and displaceably along a longitudinal axis (4) to the first shaft element (21) and which has a circumferentially extending abutment face (10), wherein the sealing sleeve (11) has a seal (27), which is arranged in sealing abutment to the abutment face (10).

## Revendications

1. Agencement d'étanchéité pour un équilibrage des longueurs d'un arbre de transmission (3), dans lequel l'agencement d'étanchéité comprend :
un premier élément d'arbre (21) qui présente un tronçon de siège (26),
un manchon d'étanchéité (11) avec un tronçon de fixation (28), dans lequel pour fixer le manchon d'étanchéité (11) sur le premier élément d'arbre (21), une rainure périphérique (32) est disposée sur le tronçon de siège (26), dans laquelle le manchon d'étanchéité (11) se met en prise, et dans lequel le manchon d'étanchéité (11) est poussé axialement en direction d'un axe longitudinal (4) avec le tronçon de fixation (28) sur le tronçon de siège (26), et
au moins une saillie d'encliquetage (36) qui est disposée radialement vers l'intérieur en saillie sur le tronçon de fixation (28) et qui se met en prise par encliquetage dans la rainure périphérique (32) lorsque le manchon d'étanchéité (11) est poussé complètement,
**caractérisé en ce**
**que** le tronçon de siège (26) présente une face d'étanchéité périphérique (34) contre laquelle le tronçon de fixation (28) du manchon d'étanchéité (11) est en position tendue élastiquement dans l'état poussé complètement.

2. Agencement d'étanchéité selon la revendication 1, **caractérisé en ce que** le tronçon de fixation (28) est déformable élastiquement, en particulier extensible, dans le sens radial en étant poussé sur le tronçon de siège (26) et maintient l'au moins une saillie d'encliquetage (36) dans la rainure périphérique (32) lorsque le manchon d'étanchéité (11) est poussé complètement.

3. Agencement d'étanchéité selon l'une des revendications précédentes, **caractérisé en ce qu'**au moins le tronçon de fixation (28) du manchon d'étanchéité (11) est fabriqué en plastique.

4. Agencement d'étanchéité selon l'une des revendications précédentes, **caractérisé en ce que** le tronçon de fixation (28) du manchon d'étanchéité (11) est en appui contre la face d'étanchéité (34) par une face intérieure périphérique (35) ou une arête intérieure.

5. Agencement d'étanchéité selon l'une des revendications précédentes, **caractérisé en ce que** la face d'étanchéité (34) est conique, pointue en direction du manchon d'étanchéité (11).

6. Agencement d'étanchéité selon l'une des revendications précédentes, **caractérisé en ce que** l'au moins une saillie d'encliquetage (36) est appuyée axialement contre une face d'appui (33) de la rainure périphérique (32).

7. Agencement d'étanchéité selon la revendication 6, **caractérisé en ce que**
le tronçon de fixation (28) du manchon d'étanchéité (11) est tendu élastiquement entre la face d'appui (33) de la rainure périphérique (32) et la face d'étanchéité (34) du tronçon de siège (26).

8. Agencement d'étanchéité selon l'une des revendications précédentes, **caractérisé en ce que** le manchon d'étanchéité (11) présente plusieurs saillies d'encliquetage (36) réparties sur le pourtour.

9. Agencement d'étanchéité selon l'une des revendications précédentes, **caractérisé en ce qu'**un jeu radial est prévu entre le tronçon de siège (26) et une face périphérique intérieure (14) du tronçon de fixation (28) du manchon d'étanchéité (11).

10. Agencement d'étanchéité selon l'une des revendications précédentes, **caractérisé en ce que** le tronçon de fixation (28) est disposé sur une première extrémité axiale (12) du manchon d'étanchéité (11).

11. Agencement d'étanchéité selon la revendication 10, **caractérisé en ce qu'**un tronçon d'étanchéité (16) avec un joint (27) est disposé sur une seconde extrémité axiale (13) du manchon d'étanchéité (11), qui sert à étanchéifier le manchon d'étanchéité (11) par rapport à un second élément d'arbre (5).

12. Agencement d'étanchéité selon la revendication 11, **caractérisé en ce que** le manchon d'étanchéité (11) présente un premier élément d'extrémité de tube (40), sur lequel le tronçon de fixation (28) est formé et un second élément d'extrémité de tube (41), sur lequel le tronçon d'étanchéité (16) est formé, dans lequel les deux éléments d'extrémité de tube (40, 41) sont reliés au moins indirectement, en particulier soudés, entre eux.

13. Agencement d'étanchéité selon la revendication 12, **caractérisé en ce qu'**au moins un élément intermédiaire de tube (42, 43) est disposé entre les deux éléments d'extrémité de tube (40, 41).

14. Agencement d'étanchéité selon l'une des revendications 12 ou 13, **caractérisé en ce que** les éléments d'extrémité de tube (40, 41) et l'au moins un élément intermédiaire de tube (42, 43) le cas échéant, sont fabriqués en plastique.

15. Arbre de transmission comprenant un agencement d'étanchéité selon l'une des revendications précédentes, dans lequel l'arbre de transmission comprend en outre :
un second élément d'arbre (5) qui est relié fixe en rotation et au premier élément d'arbre (21) en pouvant être déplacé le long d'un axe longitudinal (4) et présente une face d'appui (10) périphérique, dans lequel le manchon d'étanchéité (11) présente un joint (27) qui est disposé en appui d'étanchéité par rapport à la face d'appui (10).
